# EUROPEAN PATENT APPLICATION

(11) **EP 4 170 193 A1**
(43) Date of publication of application: **26.04.2023**
(21) Application number: 22202188.3
(22) Date of filing: 18.10.2022
(51) Int. Cl.: F16D 13/70, F16D 21/06

(54) **AN IMPROVE PRESSURE PLATE FOR USE IN A FRICTION CLUTCH UNIT**

(30) Priority: 22.10.2021 IN 202141048286
(71) Applicant: Amalgamations Valeo Clutch Private Limited, 602015 Chennai (IN)
(72) Inventor: CHINNASAMY, Venkatachalam, 602015 CHENNAI (IN); RAJESHKUMAR, Ramadoss, CHENNAI 602015 (IN)
(74) Representative: Valeo Powertrain Systems

(57) **Abstract**

The present invention is pressure plate (30a, 30b) for use in a clutch mechanism which provides torque transfer between the engine flywheel and the gear box in motorized vehicles, made of cast steel comprising an annular body (31) with an axis of rotation (X) and a plurality of tabs (32) extending radially from the outer periphery (33) of the pressure plate, the tab (32) comprising a lateral centering surface (34) arranged to press on a clutch cover, the connection of the tabs (32) with the annular body (31) comprises a necking region (35) obtained as raw foundry, the necking region (35) forming the junction between the lateral centering surface (34) and the outer periphery (33) of the pressure plate. (30a, 30b).

## Description

### TECHNICAL FIELD

The present invention relates to an improve pressure plate use in a friction clutch unit and a friction clutch unit comprising this improve pressure plate. Such friction clutch unit is positioned between an engine and transmission, for example a thermal engine or electrical engine, and a set of one or more driving wheels of a vehicle. Friction clutch units of the type indicated are used, in particular, although not exclusively, in the field of agricultural tractors, for the engagement of the transmission to the wheels and of the transmission to the power take-off shaft. Friction clutch units of the type indicated are also used, in particular, in the field of heavy-duty trucks.

### PRIOR ART

A friction clutch unit used in the field of agricultural tractors are known from document US4465170, which will be discussed hereafter.

Friction clutch unit are used for engaging the powertrain and the engine in vehicles or for disengaging the present connection. Friction clutch unit connects the engine flywheel and the input shaft of the gearbox and disengages this connection by means of pressing the clutch pedal. Friction clutch unit also connects the engine flywheel and the power take-off shaft and disengages this connection by means of pressing the clutch pedal. The torque is transmitted by a clutch disc clutched between a pressure plate and a clutch cover.

According to the document US4465170, the friction clutch unit which governs the engagement of the transmission to the power take-off shaft, the P.T.O shaft in brief, is of the normally engaged type, that is, a connection is normally established between the driving member and the P.T.O shaft inside the machine unless the operator operates the lever linkage which controls the operation of the clutch, disengaging the connection. The transmission comprises a bearing sleeve, which allows the P.T.O shaft to be disconnected outside the machine when it is not expected to be used.

During the disengagement phase, the pressure plate moves axially with regard to the clutch cover. The pressure plate is centered onto the clutch cover by using several tabs extending radially from the annular body of the pressure plate. The tabs moves into peripheral openings adapted in the clutch cover and slides onto lateral bearing surfaces facing the lateral centering surfaces of the tab. The mounting of the tabs inside the cover openings requires great assembly precision and consequently requires complete machining of the component surfaces located near this area. The tabs of the pressure plate are totally machined in the proximity of the peripheral openings of the clutch cover. This solution is expensive and time consuming in terms of manufacturing.

Within this context, the tabs of the pressure plate need to be totally machined in the proximity of the peripheral openings of the clutch cover and lead to increase in the total production cost of the friction clutch unit.

As a result, because of all of the abovementioned problems, an improvement is required in the related technical field.

### BRIEF DESCRIPTION OF THE INVENTION

The present invention relates to an improve pressure plate for use in a friction clutch unit, as for example a tractor clutch, for eliminating the above mentioned disadvantages and for bringing new advantages to the related technical field.

To this end, the invention proposes an improve pressure plate with a specific shape for the tabs which is simple to implement.

In order to realize all of the abovementioned objects and the objects which are to be deducted from the detailed description below, the present invention is a pressure plate for use in a clutch mechanism which provides torque transfer between the engine flywheel and the gear box in motorized vehicles, made of cast steel comprising an annular body with an axis of rotation X and a plurality of tabs extending radially from the outer periphery of the pressure plate, the tab comprising a lateral centering surface arranged to press on a clutch cover, the connection of the tabs with the annular body comprises a necking region obtained as raw foundry, the necking region forming the junction between the lateral centering surface and the outer periphery of the pressure plate.

This pressure plate according to the invention has the advantage of enlarging the space available between the tabs and the clutch cover without reducing the mechanical strength and the reliability of friction clutch unit. The necking region is a localized thinning of the tab obtained directly by foundry casting. The necking region creates a free space between the tab of the pressure plate and the clutch cover increasing the geometrical clearance in this area. Thanks to the invention, the length of the machined surface of the tabs are reduce.

The invention can exhibit one or another of the characteristics described below, combined with one another or taken independently of one another.

In a preferred embodiment of the present invention, the necking region forms a cavity whose bottom is rounded to limit the concentrations of mechanical stress.

In a preferred embodiment of the present invention, the lateral centering surface is a machined surface.

In a preferred embodiment of the present invention, the lateral centering surface has a rectangular shape.

In a preferred embodiment of the present invention, the lateral centering surface has a trapezoidal shape.

In a preferred embodiment of the present invention, the lateral centering surface comprises a recess able to contain lubrication grease.

In a preferred embodiment of the present invention, the tab comprises a hole arranged to receive an actuation rod, the necking region is arranged on both sides of the tab, symmetrically in relation to the plane passing through the axis of rotation and through the axis of the hole.

In a preferred embodiment of the present invention, two lateral centering surfaces are distributed symmetrically from the plane passing through the axis of rotation and through the axis of the hole.

In a preferred embodiment of the present invention, the two lateral centering surfaces are parallel.

In a preferred embodiment of the present invention, the annular body of the pressure plate comprises on one side a friction face arranged to rub on a clutch disc and on the other side a support cord arranged to cooperate with an elastic load application washer.

The invention also relates, according to another of its aspects, to a dual clutch mechanism having a clutch cover, which is able to couple to a drive shaft of the motor vehicle engine and which serves for the introduction of the torque, having a first clutch part for the coupling of the clutch cover to the first driven shaft, wherein the first clutch part has a first clutch disk and a first pressure plate taking all or some of the aforementioned features, and having a second clutch part for the coupling of the clutch cover to the second driven shaft, wherein the second clutch part has a second clutch disk and a second pressure plate taking all or some of the aforementioned features, wherein the clutch cover comprises peripheral openings into which the tabs of the first pressure plate and the tabs of the second pressure plate are inserted.

In a preferred embodiment of this aspect of the present invention, the first clutch part comprises a plurality of levers which, in order to actuate the first pressure plate, are each coupled to an actuating rod, the end of each actuating rod is inserted into a hole provided into each tab of the first pressure plate.

In a preferred embodiment of this aspect of the present invention, the second clutch part comprises a plurality of levers which, in order to actuate the second pressure plate, are each coupled to an actuating rod, the end of each actuating rod is inserted into a hole provided into each tab of the second pressure plate.

In a preferred embodiment of this aspect of the present invention, the peripheral openings of the clutch cover comprises a least one lateral bearing surface facing the lateral centering surface of the tab and adapted to limit the angular displacement of the pressure plate.

In a preferred embodiment of this aspect of the present invention, the lateral bearing surface is partially housed in the cavity formed by the necking region without contact between the two components.

The invention also relates, according to another of its aspects, to a clutch mechanism having a clutch cover, which is able to couple to a drive shaft of the motor vehicle engine and which serves for the introduction of the torque, having a clutch part for the coupling of the clutch cover to the driven shaft, wherein the clutch part has a clutch disk and a pressure plate taking all or some of the aforementioned features, wherein the clutch cover comprises peripheral openings into which the tabs of the pressure plate are inserted.

### BRIEF DESCRIPTION OF THE FIGURES

Figure 1 is the general assembly view of the dual clutch mechanism according to the first embodiment of the invention.
Figure 2 is the cross sectional view of the dual clutch mechanism according to the Figure 1.
Figure 3 is the isometric view of the dual clutch mechanism according to the Figure 1.
Figure 4 is the detail view of the pressure plate according to the first embodiment of the invention.
Figure 5 is the detail view of the pressure plate according to a second embodiment of the invention.

### DETAILED DESCRIPTION OF THE INVENTION

In this detailed description, the subject matter pressure plate 30a, 30b for use in a friction clutch unit is explained with references to examples without forming any restrictive effect only in order to make the subject more understandable.

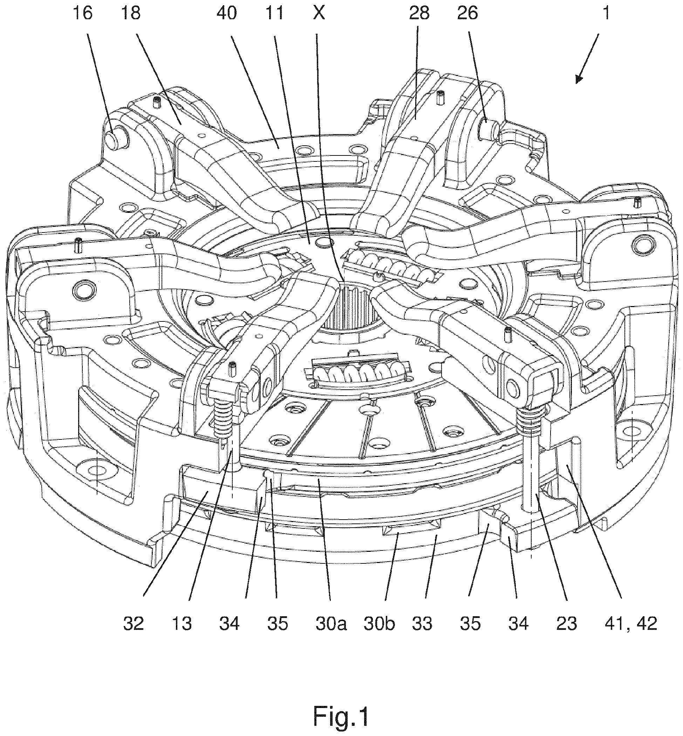

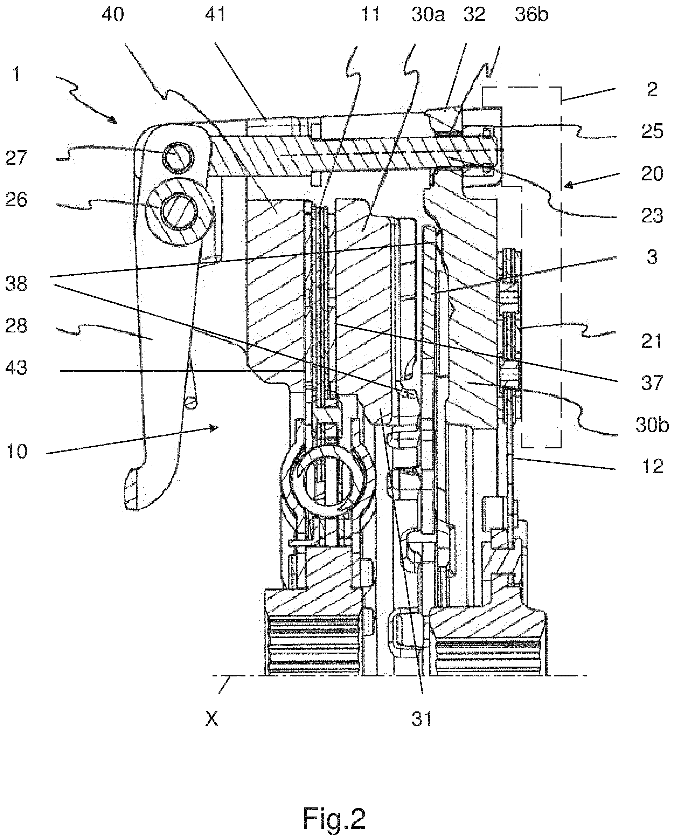

Figures 1 to 4 illustrate a friction clutch unit 1 comprising the pressure plate 30a, 30b according to a first embodiment of the invention. The friction clutch unit1 is a dual clutch mechanism having a first clutch part 10 and a second clutch part 20. The friction clutch unit 1 is fixed onto a flywheel 2.

The first clutch part 10 is used for the control of movement transfer from the thermal engine to the driving wheels of the vehicle and the second clutch part 20 is used for the control of movement transfer from the thermal engine to power take-off shaft. In the present case, the dual clutch mechanism 1 is a tractor clutch.

Accordingly, into the first clutch part 10, the torque received from the thermal motor is transferred to the tail axle by means of friction between a first pressure plate 30a and a first clutch disc 11 connected to the gearbox.

In an exemplary embodiment of said friction clutch unit 1, said pressure plate 30a is positioned between the first clutch disc 11 and a clutch cover 40. In order to actuate the first pressure plate 30a, a plurality of levers 18 are coupled to actuating rods 13. Each lever 18 is connected onto the clutch cover 40 by means of a pin 16 so as to have rotation freedom. The actuating rod 13 connected to said lever 18 from one side, and connected to the pressure plate 30a from the other side is able to be actuated for clutching or declutching. For clutching or declutching, the lever 18 moves in the movement axis X by means of the force applied onto the lever 18, and pushes the pressure plate 30a away from the first friction disc 11.

The clutch cover 40 has a body portion in circular form around an axis X and comprises a frictional surface 43. The first clutch disc 11 located inside of the clutch cover 40 rubs onto the frictional surface 43 of the clutch cover 40. During clutching operation, the friction between the first clutch disc 10 and the frictional surface 43 creates warm-up of the clutch cover 40.

According to the first embodiment of the invention, the pressure plate 30a made of cast steel comprises an annular body 31 with an axis of rotation X and a plurality of tabs 32 extending radially from the outer periphery 33 of the pressure plate. The annular body 31 of the pressure plate comprises on one side a friction face 37 arranged to rub on the second clutch disc 12 and on the other side a support cord 38 arranged to cooperate with an elastic load application washer 3.

The clutch cover 40 comprises peripheral openings 41 into which the tabs 32 of the first pressure plate 30a are inserted. The peripheral openings 41 comprises two lateral bearing surfaces 42 facing the lateral centering surfaces 34 of the tab and adapted to limit the angular displacement of the pressure plate. During the disengagement phase, the tabs 32 moves into the peripheral openings 41 and slides onto the lateral bearing surfaces 42.

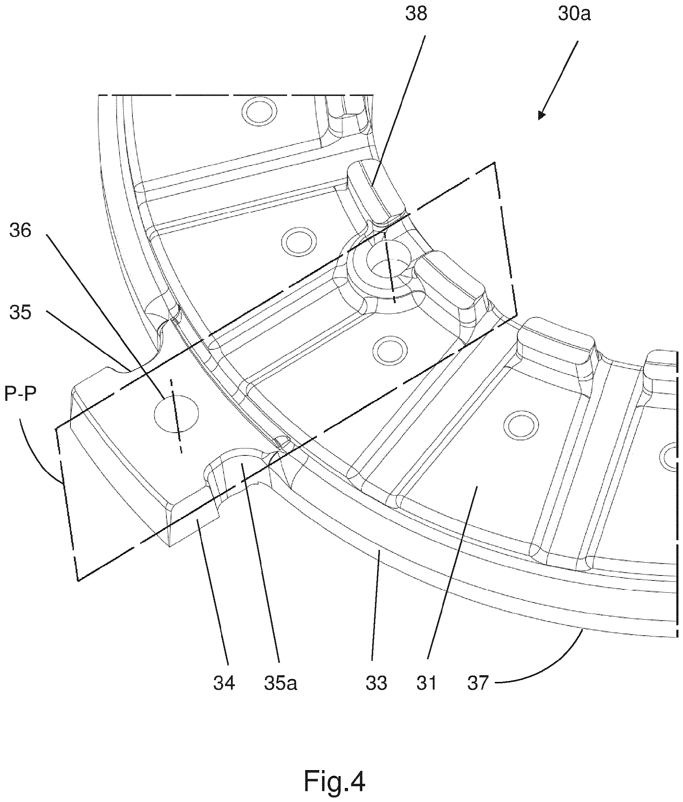

As illustrated in Figure 4, the tab 32 of the first pressure plate 30a comprises a lateral centering surface 34 arranged to press on the clutch cover 40, the connection of the tabs 32 with the annular body 31 comprises a necking region 35 obtained as raw foundry. The tab 32 comprises a hole 36 arranged to receive the actuation rod 13. The necking region 35 is distributed on both sides of the tab, symmetrically in relation to a plane P-P passing through the axis of rotation and through the axis of the hole.

The necking region 35 forms the junction between the lateral centering surface 34 and the outer periphery 33 of the pressure plate 30a. According to the invention, the necking region 35 enlarges the space available between the tabs and the peripheral openings 41 of the clutch cover 40 without reducing the mechanical strength and the reliability of friction clutch unit 1. The necking region 35 is a localized thinning of the tab obtained directly by foundry casting. The necking region 35 creates a free space between the tab of the pressure plate and the clutch cover increasing the geometrical clearance in this area.

The necking region 35 forms a cavity 35a whose bottom is rounded to limit the concentrations of mechanical stress. Also, the lateral centering surface 34 is a machined surface. The two lateral centering surfaces 34 are distributed symmetrically from the plane P-P passing through the axis of rotation and through the axis of the hole 36. The two lateral centering surfaces 34 are parallel.

For example, as illustrated in Figure 4, the lateral centering surface 34 has a trapezoidal shape. The lateral centering surface 34 could have a rectangular shape.

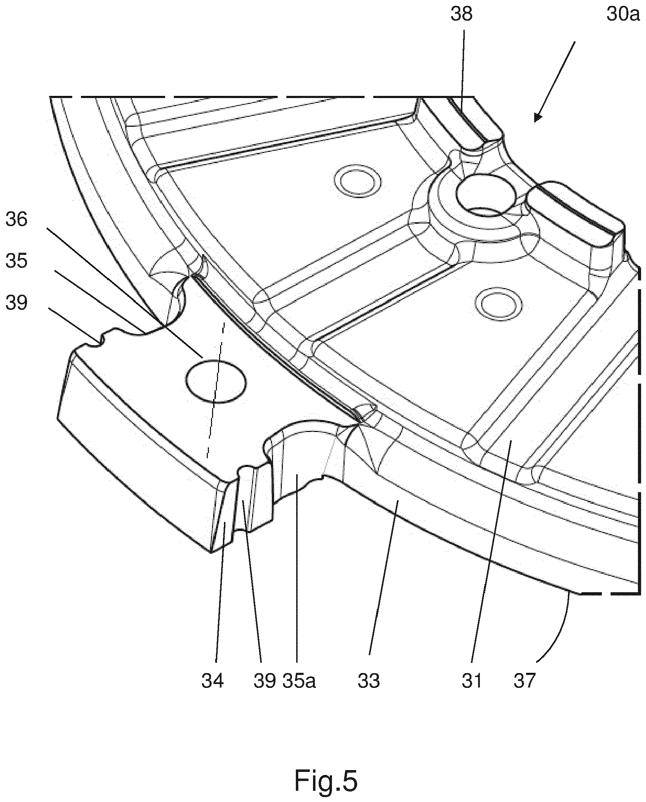

For example, as illustrated in Figure 5, the lateral centering surface 34 comprises a recess 39 able to contain lubrication grease. The grease makes it easy to slide the pressure plate off the clutch cover.

The second clutch part 20 is used for the control of movement transfer from the thermal engine to power take-off shaft of the vehicle. Accordingly, into the second clutch part 20, the torque received from the thermal motor is transferred to the power take-off shaft by means of friction between a second pressure plate 30b and a second clutch disc 12 connected to the P.T.O shaft.

In an exemplary embodiment of said friction clutch unit 1, said pressure plate 30b is positioned between the second clutch disc 12 and an elastic load application washer 3. In order to actuate the second pressure plate 30b, a plurality of levers 28 are coupled to actuating rods 23. Each lever 28 is connected onto the clutch cover 40 by means of a pin 16 so as to have rotation freedom. The actuating rod 23 connected to said lever 28 from one side, and connected to the pressure plate 30b from the other side is able to be actuated for clutching or declutching. For clutching or declutching, the lever 28 moves in the movement axis X by means of the force applied onto the lever 28, and pull the pressure plate 30b away from the second clutch disc 12. Intermediate pins 27 are inserted between levers 28 and actuating rods 23.

Inside of the clutch cover 40, the first pressure plate 30a and the second pressure plate 30b are separated by an elastic load application washer 3. The elastic washer 3 applies the axial load onto the cord 38 of the pressure plate.

According to the first embodiment of the invention, the pressure plate 30b made of cast steel comprises an annular body 31 with an axis of rotation X and a plurality of tabs 32 extending radially from the outer periphery 33 of the second pressure plate. The annular body 31 of the pressure plate comprises on one side a friction face 37 arranged to rub on the second clutch disc 12 and on the other side a support cord 38 arranged to cooperate with the elastic load application washer 3.

The clutch cover 40 comprises peripheral openings 41 into which the tabs 32 of the first pressure plate 30a are inserted.

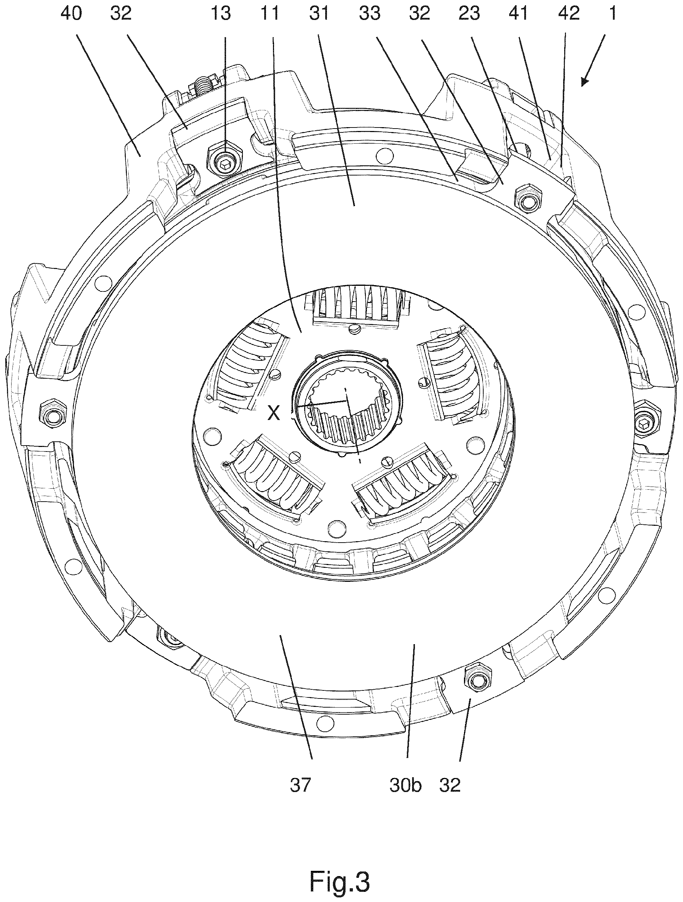

As illustrated in Figure 3, the tab 32 of the second pressure plate 30b comprises a lateral centering surface 34 arranged to press on the peripheral openings 41 of the clutch cover 40, the connection of the tabs 32 with the annular body 31 comprises a necking region 35 obtained as raw foundry.

There will now be described, with reference to Figure 5, a pressure plate 30a according to a second embodiment of the invention in which the lateral centering surface 34 comprises a recess 39 able to contain lubrication grease. The grease enable the lubrication of the contact between the tabs 32 and the peripheral openings 41. The axial movement of the pressure plate is improved.

This second embodiment is distinguished from that explained with reference to Figure 4 in that the lateral centering surface 34 is divided in two surfaces parallel. The recess 39 is smaller than the striction of the matter 35 but is also obtained directly by foundry casting. In an other embodiment, the recess can be machined.

The protection scope of the present invention is set forth in the annexed claims and cannot be restricted to the illustrative disclosures given above, under the detailed description. It is because a person skilled in the relevant art can obviously produce similar embodiments under the light of the foregoing disclosures, without departing from the main principles of the present invention.

## Claims

1. A pressure plate (30a, 30b) for use in a clutch mechanism which provides torque transfer between the engine flywheel and the gear box in motorized vehicles, made of cast steel comprising an annular body (31) with an axis of rotation (X) and a plurality of tabs (32) extending radially from the outer periphery (33) of the pressure plate, the tab (32) comprising a lateral centering surface (34) arranged to press on a clutch cover, the connection of the tabs (32) with the annular body (31) comprises a necking region (35) obtained as raw foundry, the necking region (35) forming the junction between the lateral centering surface (34) and the outer periphery (33) of the pressure plate. (30a, 30b).

2. A pressure plate (30a, 30b) according to claim 1, wherein said necking region (35) forms a cavity (35a) whose bottom is rounded to limit the concentrations of mechanical stress.

3. A pressure plate (30a, 30b) according to claim 1 or 2, wherein said lateral centering surface (34) is a machined surface.

4. A pressure plate (30a, 30b) according to one of the claims 1 to 3, wherein said lateral centering surface (34) has a rectangular shape.

5. A pressure plate (30a, 30b) according to one of the claims 1 to 3, wherein said lateral centering surface (34) has a trapezoidal shape.

6. A pressure plate (30a, 30b) according to one of the claims 1 to 5, wherein said lateral centering surface (34) comprises a recess (39) able to contain lubrication grease.

7. A pressure plate (30a, 30b) according to any one of the preceding claims, wherein said tab (32) comprises a hole (36) arranged to receive an actuation rod, the necking region (35) is distributed on both sides of the tab (32), symmetrically in relation to the plane (P-P) passing through the axis of rotation and through the axis of the hole.

8. A pressure plate (30a, 30b) according to the preceding claim, wherein two lateral centering surfaces (34) are distributed symmetrically from the plane (P-P) passing through the axis of rotation and through the axis of the hole.

9. A pressure plate (30a, 30b) according to the preceding claim, wherein said two lateral centering surfaces (34) are parallel.

10. A pressure plate (30a, 30b) according to any one of the preceding claims, wherein said annular body (31) of the pressure plate comprises on one side a friction face (37) arranged to rub on a clutch disc and on the other side a support cord (38) arranged to cooperate with an elastic load application washer.

11. A dual clutch mechanism (1) having a clutch cover (40), which is able to couple to a drive shaft of the motor vehicle engine and which serves for the introduction of the torque, having a first clutch part (10) for the coupling of the clutch cover (40) to the first driven shaft, wherein the first clutch part (10) has a first clutch disk (11) and a first pressure plate (30a) according to anyone of the preceding claims, and having a second clutch part (20) for the coupling of the clutch cover (2) to the second driven shaft, wherein the second clutch part (20) has a second clutch disk (12) and a second pressure plate (30b) according to anyone of the preceding claims, wherein the clutch cover (40) comprises peripheral openings (41) into which the tabs of the first pressure plate and the tabs of the second pressure plate are inserted.

12. **A** dual clutch mechanism (1) according to claim 11, wherein said first clutch part (10) comprises a plurality of levers (18) which, in order to actuate the first pressure plate (30a), are each coupled to an actuating rod (13), the end (14) of each actuating rod is inserted into a hole (36a) provided into each tab of the first pressure plate.

13. A dual clutch mechanism (1) according to claim 11, the second clutch part (20) comprises a plurality of levers (28) which, in order to actuate the second pressure plate (30b), are each coupled to an actuating rod (23), the end (24) of each actuating rod (13) is inserted into a hole (36b) provided into each tab of the second pressure plate.

14. A dual clutch mechanism (1) according to one of the claims 11 to 13, wherein said peripheral openings (41) of the clutch cover comprises a least one lateral bearing surface (42) facing the lateral centering surface (34) of the tab and adapted to limit the angular displacement of the pressure plate.

15. A clutch mechanism (1) having a clutch cover (40), which is able to couple to a drive shaft of the motor vehicle engine and which serves for the introduction of the torque, having a clutch part (10) for the coupling of the clutch cover (40) to the driven shaft, wherein the clutch part (10) has a clutch disk (11) and a pressure plate (30a) according to anyone of the claims 1 to 10, wherein the clutch cover (40) comprises peripheral openings (41) into which the tabs (32) of the pressure plate are inserted.
